# FASCICULE DE BREVET EUROPEEN

(11) **EP 2 574 655 B1**
(45) Date de publication et mention de la délivrance du brevet: **05.10.2016**
(21) Numéro de dépôt: 12182273.8
(22) Date de dépôt: 29.08.2012
(51) Int. Cl.: C10L 1/14, C10L 10/00, C10L 10/06, C11D 11/00, F02B 77/04, F02D 41/00, F02M 25/00, F02M 65/00, F02D 41/24, F02D 19/12

(54) **PROCÉDÉ DE TRAITEMENT CURATIF DE L'ENCRASSEMENT INTERNE D'UN INJECTEUR DE CARBURANT DANS UN MOTEUR À COMBUSTION INTERNE**
VERFAHREN ZUR KURATIVEN BEHANDLUNG DER INNEREN VERSCHMUTZUNG EINES KRAFTSTOFFEINSPRITZERS IN EINEM VERBRENNUNGSMOTOR
METHOD FOR TREATING INTERNAL FOULING OF A FUEL INJECTOR IN AN INTERNAL COMBUSTION ENGINE

(30) Priorité: 30.09.2011 FR 1158787
(43) Date de publication de la demande: 03.04.2013
(73) Titulaire: PEUGEOT CITROËN AUTOMOBILES SA, 78140 Vélizy-Villacoublay (FR)
(72) Inventeur: Crepeau, Gerald, 92700 Colombes (FR); Lacoste, Julien, 78110 Le Vésinet (FR); Faye, Gabriel, 92800 Puteaux (FR); le Tallec, Patrice, 78500 Sartrouville (FR); Azou, Yvon, 94130 Nogent sur Marne (FR); Maire, François, 92400 Courbevoie (FR); Santelli, Frédéric, 57255 Ste Marie aux Chênes (FR)

(56) Documents cités:
- EP-A1- 0 203 692
- EP-A1- 1 555 416
- EP-A1- 1 887 074
- EP-A2- 1 331 376
- DE-A1-102004 062 011
- FR-A- 1 167 709
- FR-A1- 2 910 072
- FR-A2- 2 367 111
- GB-A- 2 277 386
- US-A- 4 242 101
- US-A- 5 385 588
- US-A1- 2010 210 492
- US-B1- 6 874 480
- US-B1- 7 927 387
- Scott D. Schwab ET AL: "Internal Injector Deposits in High-Pressure Common Rail Diesel Engines", SAE Technical Paper, no. 2010-01-2242 25 octobre 2010 (2010-10-25), pages 865-878, XP055029840, U.S.A. DOI: 10.4271/2010-01-2242 Extrait de l'Internet: URL:http://digitallibrary.sae.org/content/ 2010-01-2242 [extrait le 2012-06-13]
- Caprotti, R. et Al.: "Deposit Control in Modern Diesel Fuel Injection Systems.", SAE Technical Paper, no. 2010-01-2250 25 octobre 2010 (2010-10-25), pages 901-915, XP002679060, U.S.A. DOI: 10.4271/2010-01-2250 Extrait de l'Internet: URL:http://digitallibrary.sae.org/content/ 2010-01-2250 [extrait le 2012-06-13]

## Description

La présente invention concerne un procédé de traitement curatif de l'encrassement interne d'un injecteur de carburant dans un moteur à combustion interne.

Un injecteur de carburant dans un moteur à combustion interne permet l'apport du carburant en amont ou dans la chambre de combustion du moteur à combustion interne. Lors du fonctionnement de l'injecteur de carburant des réactions chimiques se produisent, engendrant un encrassement interne et externe des injecteurs de carburant. Cet encrassement interne et externe se caractérise par la formation de dépôts sur les parois de l'injecteur de carburant.

L'encrassement externe des injecteurs de carburant est causé par la cokéfaction des gaz de combustion et du carburant, également appelé coking, se caractérisant par la formation de dépôts localisés au niveau du nez de l'injecteur de carburant, au niveau de la buse à proprement dite. La présence des dépôts localisés à l'intérieur des injecteurs de carburant est due à un premier et un deuxième mécanisme d'encrassement. Le premier type d'encrassement est le résultat d'une saponification, par entre par exemple le sodium pouvant provenir des additifs inhibiteurs de corrosion, et des acides gras venant d'additifs de lubrifiance et/ou des biodiesels. Le second type d'encrassement est le résultat de la polymérisation, oxydative radicalaire et/ou de nitro-oxydation, entre certains additifs de détergence, tels que les additifs polyisobutène succinimides non protégés, et les additifs acides ou les esters méthyliques d'acides gras en présence de certains catalyseurs tels que l'additif procétane, certains métaux tels que le cuivre ou le nickel.

L'encrassement interne d'un injecteur de carburant, dans le corps de l'injecteur, se différencie de l'encrassement des buses évoqué plus haut est celui qui intéresse la présente invention. Cet encrassement entraîne une réduction des jeux fonctionnels ne permettant pas de garantir le bon fonctionnement de l'injecteur de carburant. Les dysfonctionnements associés à la formation de cet encrassement interne d'un injecteur de carburant peuvent se caractériser par un ralentissement des déplacements des composants internes des injecteurs de carburant, affectant ainsi le temps d'injection du carburant des systèmes pression - temps, par exemple de type rampe commune (de l'anglais « Common Rail »). L'encrassement interne d'un injecteur de carburant vient perturber l'ouverture de l'injecteur de carburant. Le temps d'ouverture de l'injecteur de carburant s'en trouve ainsi réduit ce qui engendre une réduction du débit de carburant injecté. Les effets sur le fonctionnement du moteur à combustion interne se traduisent ensuite par une impossibilité de démarrer, un mauvais démarrage à froid, un mauvais démarrage puis un calage et/ou une instabilité.

A l'heure actuelle, plusieurs solutions ont été développées utilisant des additifs de traitement de l'encrassement externe d'un injecteur de carburant pour cibler et éliminer les dépôts dus à la combustion. Ces solutions proposent notamment d'injecter les additifs de traitement de l'encrassement d'un injecteur de carburant dans l'air d'admission du moteur à combustion interne ou d'incorporer ces additifs de traitement de l'encrassement d'un injecteur de carburant dans la composition de l'huile ou du carburant utilisés pour le fonctionnement du moteur à combustion interne. Ces solutions présentent l'inconvénient de proposer des traitements continus, et non curatifs, de l'encrassement d'un injecteur de carburant, engendrant un coût élevé de mis en oeuvre. En outre, ces solutions ne résolvent pas le problème de l'encrassement interne d'un injecteur de carburant.

Le document WO-A-03/062626 décrit un procédé permettant l'élimination des dépôts carbonés présents à l'intérieur d'un moteur à combustion interne. Pour cela, une solution nettoyante est appliquée au plus près de ces dépôts carbonés, à l'intérieur du moteur à combustion interne. Les dépôts carbonés éliminés ici sont occasionnés par des réactions chimiques d'oxydation, de polymérisation et/ou de cokéfaction. Un inconvénient majeur de ce procédé est qu'il ne permet que d'éliminer l'encrassement externe des composants du moteur à combustion interne. En outre, ce procédé nécessite l'utilisation d'un dispositif invasif nécessitant une connexion au moteur à combustion interne, ce qui engendre une réelle difficulté de mise en oeuvre ainsi qu'un coût élevé. Le document EP 1 887 074 A1 décrit une méthode d'élimination substantielles des dépôts d'injecteurs dans un moteur diesel fonctionnant au carburant diesel, comprenant l'ajout au carburant diesel du produit de réaction d'un acide succinique substitué par un hydrocarbyle, et d'hydrazine; les dépôts présents à l'intérieure et à l'extérieure des orifices de vaporisation de l'injecteur sont enlevés de façon à ce que le fonctionnement normal de l'injecteur ne soit pas empêché. Le document EP 0 203 692 A1 divulgue un concentré d'additifs comprenant une solution de 20-90% en poids d'un mélange de i) 20-40% en poids d'un polyphénol, d'un polyphénol sulfuré ou phénol encombré qui sont de préférence des alkylphénols, et ii) 80-60% en poids d'une amide cyclique qui est une polyisobutène succinimine amide; les solvants utilisés sont du kérosène, des naphthas aromatiques, des huiles lubrifiantes minérales. Le concentré est utilisé comme additif dans un carburant diesel pour réduire la formation de sédiments et de gommes provoquée par une polymérisation radicalaire pendant l'entreposage d'un carburant diesel, et pour réduire la formation de dépôts dans les buses d'injecteurs de moteurs diesel. Le concentré est utilisé comme additif dans un carburant diesel pour augmenter sa stabilité lors d'un stockage de longue durée, et sa stabilité à l'oxydation.

Il existe donc un besoin pour fournir un procédé de traitement curatif de l'encrassement interne des injecteurs de carburant de moteurs à combustion interne dont la mise en oeuvre est peu couteuse et plus aisée.

A cette fin, l'invention propose un procédé de traitement curatif de l'encrassement interne d'un injecteur de carburant dans un moteur à combustion interne, tel que décrit à la revendication 1, caractérisé en ce qu'il comprend les étapes consistant à (i) mélanger une quantité d'additif curatif de l'encrassement interne de l'injecteur de carburant avec du carburant du moteur à combustion interne ; et (ii) faire fonctionner le moteur à combustion interne, l'additif étant constitué de 10 à 30% de solvant apolaire, de 10 à 20% de 2-éthylhexanol, de 20 à 60% de polyisobutène succinimine amide, de 10 à 30% de dérivés d'alkylphénols et/ou d'amides d'acides gras et le complément éventuel d'huile minérale.

Le procédé comprend, en outre, les étapes suivantes, antérieures à l'étape (i) : (a) déterminer la quantité de carburant dans un réservoir de carburant alimentant le moteur à combustion interne ; (b) déterminer la quantité d'additif curatif de l'encrassement interne de l'injecteur de carburant à mélanger avec le carburant en fonction de la quantité de carburant déterminée.

La détermination de la quantité d'additif curatif de l'encrassement interne de l'injecteur de carburant à l'étape (b) est réalisée par lecture d'un abaque.

Selon une variante, le moteur à combustion interne fonctionne au ralenti.

Selon une variante, le procédé comprend, en outre, les étapes suivantes, postérieures à l'étape (ii) : (iii) mesurer une valeur du temps d'injection de l'injecteur de carburant ; (iv) vérifier que le temps d'injection de l'injecteur de carburant est compris dans un intervalle prédéterminé ; (v) remettre à zéro les opérations d'auto-adaptation du débit injecté en fonction des habitudes du conducteur du véhicule automobile enregistrées sur un calculateur de gestion du moteur ; (vi) réapprendre les opérations d'auto-adaptation du débit injecté en fonction des habitudes du conducteur du véhicule automobile.

Selon une variante, l'intervalle prédéterminé est l'intervalle 200-800 µs.

Par exemple, l'additif de traitement curatif de l'encrassement interne d'un injecteur de carburant de moteur à combustion interne selon l'invention peut être constitué de 10 à 30% de solvant apolaire, de 10 à 20% de 2-éthylhexanol, de 20 à 60% de polyisobutène succinimine amide, de 10 à 30% de dérivés d'alkylphénols et/ou d'amides d'acides gras et le complément éventuel d'huile minérale.

De préférence, le rapport du pourcentage de polyisobutène succinimine amide sur le pourcentage de dérivés d'alkylphénols et/ou d'amides d'acides gras est d'environ 2/1.

De préférence, l'additif comprend entre 30 et 50% de polyisobutène succinimine amide. Par exemple, l'additif peut comprendre 30 ou 40 ou 50% de ce composé.

De préférence, l'additif comprend entre 15 et 25% de dérivés d'alkylphénols et/ou d'amides d'acides gras.

De préférence, l'additif comprend entre 15 et 25% de solvant apolaire.

Dans tout le présent texte, les pourcentages de composants relatifs à l'additif sont exprimés en volume.

Cette formulation permet de façon très avantageuse de répondre à une double contrainte, qui est d'une part d'assurer que la formulation de l'additif aboutit à une phase liquide homogène, stable, monophasique, et d'autre part que la carburant, une fois l'additif ajouté dans celui-ci, reste également sous forme d'une phase liquide homogène, stable, monophasique (le carburant étant généralement de type majoritairement apolaire alors l'additif peut comporter un ou des composants polaires, comme les dérivés alcooliques).

La formulation de l'additif selon l'invention est ainsi particulièrement appropriée pour un carburant de type diesel, notamment du type de ceux comprenant une certaine proportion de carburant d'origine végétale, par exemple comportant de 2 à 30% d'esters méthyliques d'acides gras (biodiesel).

En effet, les dérivés d'alkylphénols ou d'amides d'acides gras jouent alors pleinement leur rôle, notamment, d'antioxydants vis-à-vis du carburant d'origine végétale (biodiesel), qui a tendance à s'oxyder notamment en cas de stockage prolongé dans le réservoir du véhicule. Il s'est avéré qu'ils renforçaient également l'effet du polyisobutène succinimine amide qui est le principe actif de l'additif vis-à-vis de l'encrassement.

A noter que le 2-éthylhexanol joue le rôle de co-solvant polaire, afin de régler la compatibilité des différents composants de l'additif, et de l'additif avec le carburant qui peut contenir une certaine quantité de composants polaires (biodiesel).

A noter que l'huile minérale est optionnelle, et sert à compléter à 100% la formulation de l'additif. Elle peut donc être absente de la formulation, ou en contenir jusqu'à 40%.

Selon une variante, on fait fonctionner le moteur à combustion interne durant une heure à l'étape (ii).

Selon une variante, le moteur à combustion interne est un moteur diesel.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe d'un injecteur de carburant ;
- figure 2, un abaque de correspondance entre la quantité de carburant présente dans le réservoir alimentant le moteur à combustion interne et la quantité d'additif curatif de l'encrassement interne de l'injecteur de carburant à mélanger avec le carburant.

L'invention se rapporte à un procédé de traitement curatif de l'encrassement interne d'un injecteur de carburant dans un moteur à combustion interne de type diesel. L'invention ne concerne que le traitement curatif de l'encrassement interne de l'injecteur de carburant dû aux réactions chimiques de type polymérisation ou saponification décrites précédemment et non de l'encrassement dû aux réactions chimiques de type cokéfaction ou coking.

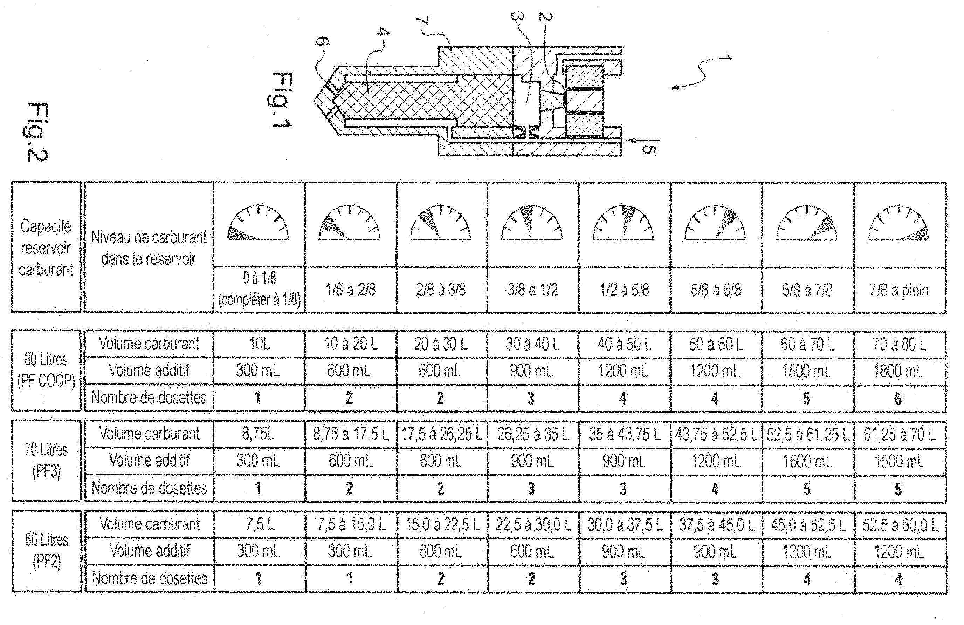

La figure 1 montre une vue en coupe d'un injecteur de carburant 1 tel que traité dans le procédé selon l'invention. L'injecteur de carburant 1 est constitué d'un corps 7 dans lequel une aiguille 4 est susceptible de se translater suivant l'axe longitudinal du corps 7 et/ou de se déformer. Un orifice d'alimentation de carburant haute pression 5 permet d'alimenter l'intérieur du corps 7 avec du carburant. La translation de l'aiguille 4 et/ou sa déformation suivant l'axe longitudinal du corps permet l'injection du carburant en libérant les orifices d'injection 6. L'association d'un élément de commande 2, constitué d'un actuateur et d'une valve, et d'un volume de contrôle 3, communiquant avec l'orifice d'alimentation de carburant haute pression 5, permet de commander la translation de l'aiguille 4 et/ou sa déformation et ainsi de réguler le débit de carburant injecté.

Le procédé selon l'invention permet d'éliminer les dépôts occasionnés par les premier et deuxième types d'encrassement décrits précédemment, qui se localisent principalement sur les parois internes du corps 7, au niveau du volume de contrôle 3, des orifices d'injection 6 et au niveau de l'aiguille 4.

La mise en oeuvre du procédé selon l'invention comporte une première étape de mélange d'une quantité d'additif curatif de l'encrassement interne de l'injecteur de carburant avec du carburant. La quantité d'additif peut notamment être déterminée grâce à la lecture d'un abaque tel que celui représente à la figure 2.

L'abaque illustré à la figure 2 est représenté sous forme de tableau de correspondance entre la quantité de carburant présente dans le réservoir alimentant le moteur à combustion interne, au moment où le procédé selon l'invention va être mis en oeuvre, et la quantité d'additif curatif de l'encrassement interne de l'injecteur de carburant à mélanger avec le carburant. Dans la partie supérieure du tableau, il est illustré le niveau correspondant de la jauge de carburant présente sur la planche de bord du véhicule automobile. L'utilisation de ce tableau comporte une première étape consistant à évaluer, sur le véhicule automobile, dans quel intervalle est compris le taux de remplissage du réservoir de carburant alimentant le moteur à combustion interne au moment où le procédé selon l'invention va être mis en oeuvre. Ce taux de remplissage correspond à une position de la jauge de carburant sur le tableau de bord entre les différentes graduations qui y sont représentées. Le taux de remplissage permet de déterminer la colonne du tableau dans laquelle la lecture de la quantité d'additif curatif doit être réalisée.

Une deuxième étape consiste à déterminer la capacité du réservoir de carburant alimentant le moteur à combustion interne. La capacité du réservoir de carburant permet ensuite de déterminer la ligne de lecture de la correspondance entre la quantité de carburant présente dans le réservoir alimentant le moteur à combustion interne et la quantité d'additif curatif de l'encrassement interne de l'injecteur de carburant à mélanger avec le carburant. Une première ligne concerne les réservoirs de carburant de 80 litres, une deuxième ligne concerne les réservoirs de carburant de 70 litres et une troisième ligne concerne les réservoirs de carburant de 60 litres.

Enfin, une troisième étape consiste à localiser la quantité d'additif curatif de l'encrassement interne de l'injecteur de carburant correspondant à la quantité de carburant présente dans le réservoir alimentant le moteur à combustion interne placée à l'intersection de la colonne et de la ligne de lecture précédemment déterminées.

A titre d'exemple, selon l'abaque de la figure 2, pour un réservoir d'une capacité maximale de 70 litres rempli au 5/8^{e}, 1200 mL d'additif curatif de l'encrassement interne de l'injecteur de carburant doivent être utilisés. Il est important de noter qu'un taux de remplissage minimal de 1/8^{e} de la capacité du réservoir de carburant est nécessaire pour mettre en oeuvre le procédé selon l'invention.

Une fois la quantité d'additif curatif de l'encrassement interne de l'injecteur de carburant à mélanger avec du carburant déterminée, on dilue de façon homogène cette quantité d'additif curatif de l'encrassement interne de l'injecteur de carburant dans une quantité de carburant, de manière préférée un litre de carburant. Il est important que la dilution soit faite dans un récipient propre. Le mélange ainsi obtenu est ensuite introduit dans le réservoir de carburant alimentant le moteur à combustion interne.

Ensuite, une nouvelle étape du procédé selon l'invention consiste à faire fonctionner le moteur à combustion interne au ralenti. De préférence, le moteur à combustion interne fonctionne dans cet intervalle de vitesses moteur pendant une durée d'une heure.

Une troisième étape additionnelle consiste alors à mesurer une valeur du temps d'injection de l'injecteur de carburant.

Il est alors possible de vérifier que le temps d'injection est compris dans un intervalle prédéterminé. Pour exemple, le temps d'injection de l'injecteur de carburant doit être compris entre 200 et 800 µs lorsque le moteur à combustion interne fonctionne au ralenti.

On peut alors remettre à zéro les opérations d'auto-adaptation du débit injecté en fonction des habitudes du conducteur du véhicule automobile. Les opérations d'auto-adaptation du débit injecté sont des opérations effectuées par un calculateur de gestion moteur connecté aux différents organes du moteur à combustion interne. Les opérations d'auto-adaptation du débit injecté permettent de corriger le débit injecté par l'injecteur de carburant en fonction des habitudes d'utilisation du conducteur du véhicule automobile. Il est nécessaire de remettre à zéro les opérations d'auto-adaptation du débit injecté à la suite du traitement curatif de l'encrassement interne d'un injecteur de carburant car le nettoyage des injecteurs peut provoquer des perturbations de ces opérations d'auto-adaptation du débit injecté.

Une sixième étape consiste alors à réapprendre les opérations d'auto-adaptation du débit injecté de façon à retransmettre au calculateur de gestion moteur les informations concernant les habitudes d'utilisation de l'utilisateur du véhicule automobile, au fur et à mesure de l'utilisation du véhicule automobile par le conducteur.

Ainsi l'invention permet de disposer d'une gamme après vente traitant de façon curative l'encrassement interne des injecteurs de carburant conduisant à une limitation des coûts liés à la garantie du véhicule automobile et réduisant ainsi les insatisfactions des utilisateurs du véhicule automobile. En outre, le procédé selon l'invention permet d'assurer la pérennité des émissions polluantes en maintenant le niveau de consommation de carburant par le moteur à combustion interne. La durabilité du moteur à combustion en est ainsi également accrue.

Il est à noter qu'avec cet additif, il est possible de décrasser rapidement et aisément les injecteurs, dans un garage sans équipement lourd du type cabine moteur

## Revendications

1. Procédé de traitement curatif de l'encrassement interne d'un injecteur de carburant dans un moteur à combustion interne, **caractérisé en ce qu'**il comprend les étapes consistant à :
(i) mélanger une quantité d'additif curatif de l'encrassement interne de l'injecteur de carburant avec du carburant du moteur à combustion interne ;
(ii) faire fonctionner le moteur à combustion interne
et **en ce qu'**il comprend, en outre, les étapes suivantes, antérieures à l'étape (i) :
(a) déterminer la quantité de carburant dans un réservoir de carburant alimentant le moteur à combustion interne ;
(b) déterminer la quantité d'additif curatif de l'encrassement interne de l'injecteur de carburant à mélanger avec le carburant en fonction de la quantité de carburant déterminée par lecture d'un abaque,
l'additif étant constitué de 10 à 30 % en volume de solvant apolaire, de 10 à 20 % en volume de 2-éthylhexanol, de 20 à 60 % en volume de polyisobutène succinimine amide, de 10 à 30% en volume de dérivés d'alkylphénols et/ou d'amides d'acides gras et le complément éventuel en huile minérale.

2. Procédé selon la revendication précédente, caractérisé en ce le moteur à combustion interne fonctionne à l'étape (ii) à un régime de ralenti moteur.

3. Procédé selon l'une des revendications précédentes, **caractérisé en ce que** le procédé comprend, en outre, les étapes suivantes, postérieures à l'étape (ii) :
(iii) mesurer une valeur du temps d'injection de l'injecteur de carburant ;
(iv) vérifier que le temps d'injection de l'injecteur de carburant est compris dans un intervalle prédéterminé ;
(v) remettre à zéro les opérations d'auto-adaptation du débit injecté en fonction des habitudes du conducteur du véhicule automobile enregistrées sur un calculateur de gestion du moteur ;
(vi) réapprendre les opérations d'auto-adaptation du débit injecté en fonction des habitudes du conducteur du véhicule automobile.

4. Procédé selon la revendication précédente, **caractérisé en ce que** l'intervalle prédéterminé est l'intervalle 200-800 µs.

5. Procédé selon l'une des revendications précédentes, **caractérisé en ce qu'**on fait fonctionner le moteur à combustion interne durant une heure à l'étape (ii).

6. Procédé selon l'une des revendications précédentes, **caractérisé en ce que** le moteur à combustion interne est un moteur diesel.

7. Additif de traitement curatif de l'encrassement interne d'un injecteur de carburant de moteur à combustion interne, **caractérisé en ce qu'**il est constitué de 10 à 30 % en volume de solvant apolaire, de 10 à 20 % en volume de 2-éthylhexanol, de 20 à 60 % en volume de polyisobutène succinimine amide, de 10 à 30 % en volume de dérivés d'alkylphénols et/ou d'amides d'acides gras et le complément éventuel d'huile minérale.

8. Additif selon la revendication précédente, **caractérisé en ce que** le rapport du pourcentage en volume de polyisobutène succinimine amide sur le pourcentage en volume de dérivés d'alkylphénols et/ou d'amides d'acides gras est d'environ 2/1.

9. Additif selon l'une des revendications 7 ou 8, **caractérisé en ce qu'**il comprend entre 30 et 50% en volume de polyisobutène succinimine amide.

10. Additif selon l'une des revendications 7 à 9, **caractérisé en ce qu'**il comprend entre 15 et 25% en volume de dérivés d'alkylphénols et/ou d'amides d'acides gras.

11. Additif selon l'une des revendications 7 à 10, **caractérisé en ce qu'**il comprend entre 15 et 25% en volume de solvant apolaire.

## Patentansprüche

1. Verfahren zur kurativen Behandlung der Verschmutzung des Inneren einer Kraftstoffeinspritzvorrichtung in einem Innenverbrennungsmotor, **dadurch gekennzeichnet, dass** es die folgenden Schritte umfasst:
(i) Beimischen einer Menge eines kurativen Additives gegen die Verschmutzung des Inneren einer Kraftstoffeinspritzvorrichtung zu einem Kraftstoff des Innenverbrennungsmotors;
(ii) Laufenlassen des Innenverbrennungsmotors
und dadurch, dass es darüber hinaus die folgenden Schritte umfasst, die vor dem Schritt (i) durchgeführt werden:
(a) Bestimmen der Menge an Kraftstoff in einem Kraftstofftank zur Versorgung des Innenverbrennungsmotors;
(b) Bestimmen der Menge an kurativem Additiv gegen die Verschmutzung des Inneren der Kraftstoffeinspritzvorrichtung, die zum Kraftstoff beizumischen ist, in Abhängigkeit von der Menge an Kraftstoff, der durch das Auslesen eines Abakus bestimmt worden ist,
wobei das Additiv aus 10 bis 30 Vol.-% an unpolarem Lösungsmittel, 10 bis 20 Vol.-% an 2-Ethylhexanol, 20 bis 60 Vol.-% an Polyisobutylen Succinimid, 10 bis 30 Vol.-% an Alkylphenol-Derivaten und/ oder Fettsäureamiden und der eventuellen Ergänzung an Mineralöl besteht.

2. Verfahren nach dem vorherigen Anspruch, **dadurch gekennzeichnet, dass** der Innenverbrennungsmotor im Schritt (ii) im Motorleerlauf läuft.

3. Verfahren nach einem der vorherigen Ansprüche, **dadurch gekennzeichnet, dass** das Verfahren darüber hinaus die folgenden Schritte nach dem Schritt (ii) umfasst:
(iii) Messen eines Werts für die Einspritzzeit der Kraftstoffeinspritzvorrichtung;
(iv) Überprüfen, ob die Einspritzzeit der Kraftstoffeinspritzvorrichtung in einem vorbestimmten Intervall enthalten ist;
(v) Zurücksetzen der Selbstanpassungsvorgänge der eingespritzten Menge in Abhängigkeit von den Gewohnheiten des Kraftfahrzeuglenkers, die in einem Motormanagement-Rechner gespeichert sind;
(vi) Neulernen der Selbstanpassungsvorgänge der eingespritzten Menge in Abhängigkeit von den Gewohnheiten des Kraftfahrzeuglenkers.

4. Verfahren nach dem vorherigen Anspruch, **dadurch gekennzeichnet, dass** das vorbestimmte Intervall das Intervall von 200-800 µs ist.

5. Verfahren nach einem der vorherigen Ansprüche, **dadurch gekennzeichnet, dass** man den Innenverbrennungsmotor im Schritt (ii) eine Stunde lang laufen lässt.

6. Verfahren nach einem der vorherigen Ansprüche, **dadurch gekennzeichnet, dass** der Innenverbrennungsmotor ein Dieselmotor ist.

7. Additiv zur kurativen Behandlung der Verschmutzung des Inneren einer Kraftstoffeinspritzvorrichtung in einen Innenverbrennungsmotor, **dadurch gekennzeichnet, dass** es aus 10 bis 30 Vol.-% an unpolarem Lösungsmittel, 10 bis 20 Vol.-% an 2-Ethylhexanol, 20 bis 60 Vol.-% an Polyisobutylen Succinimid, 10 bis 30 Vol.-% an Alkylphenol-Derivaten und/ oder Fettsäureamiden und der eventuellen Ergänzung an Mineralöl besteht.

8. Additiv nach dem vorherigen Anspruch, **dadurch gekennzeichnet, dass** das Verhältnis des Vol.-% an Polyisobutylen Succinimid zum Vol.-% an Alkylphenol-Derivaten und/ oder Fettsäureamiden etwa 2/1 beträgt.

9. Additiv nach einem der Ansprüche 7 oder 8, **dadurch gekennzeichnet, dass** es zwischen 30 und 50 Vol.-% an Polyisobutylen Succinimid umfasst.

10. Additiv nach einem der Ansprüche 7 bis 9, **dadurch gekennzeichnet, dass** es zwischen 15 und 25 Vol.-% an Alkylphenol-Derivaten und/ oder Fettsäureamiden umfasst.

11. Additiv nach einem der Ansprüche 7 bis 10, **dadurch gekennzeichnet, dass** es zwischen 15 und 25 Vol.-% an unpolarem Lösungsmittel umfasst.

## Claims

1. Method for the curative treatment of the internal fouling of a fuel injector in an internal combustion engine, **characterised in that** it comprises the steps consisting in:
(i) mixing a quantity of curative additive of the internal fouling of the fuel injector with fuel of the internal combustion engine;
(ii) operating the internal combustion engine
and **in that** it comprises, furthermore, the following steps, prior to the step (i):
(a) determining the quantity of fuel in a fuel tank supplying the internal combustion engine;
(b) determining the quantity of curative additive for the internal fouling of the fuel injector to be mixed with the fuel according to the quantity of fuel determined by reading a chart,
with the additive constituted from 10 to 30% by volume of apolar solvent, from 10 to 20% by volume of 2-ethylhexanol, from 20 to 60% by volume of polyisobutene succinimine amide, from 10 to 30% by volume of alkylphenol derivatives and/or of fatty acid amides and the possible complement with mineral oil.

2. Method as claimed in the preceding claim, **characterised in that** the internal combustion engine operates in the step (ii) at an idling speed of the engine.

3. Method according to one of the preceding claims, **characterised in that** the method comprises, furthermore, the following steps, after the step (ii):
(iii) measuring a value of the injection time of the fuel injector;
(iv) verifying that the injection time of the fuel injector is within a predetermined interval;
(v) resetting the self-adapting operations of the flow rate injected according to the habits of the driver of the motor vehicle recorded on a management computer of the engine;
(vi) relearning the self-adapting operations of the flow rate injected according to the habits of the driver of the motor vehicle.

4. Method as claimed in the preceding claim, **characterised in that** the predetermined interval is the interval 200-800 µs.

5. Method according to one of the preceding claims, **characterised in that** the internal combustion engine is made to operate for one hour in the step (ii).

6. Method according to one of the preceding claims, **characterised in that** the internal combustion engine is a diesel engine.

7. Curative treatment additive for the internal fouling of a fuel injector of an internal combustion engine, **characterised in that** it is comprised from 10 to 30% by volume apolar solvent, from 10 to 20% by volume of 2-ethylhexanol, from 20 to 60% by volume of polyisobutene succinimine amide, from 10 to 30% by volume of alkylphenol derivatives and/or of fatty acid amides and the possible complement with mineral oil.

8. Additive as claimed in the preceding claim, **characterised in that** the ratio of the percentage by volume of polyisobutene succinimine amide over the percentage by volume of alkylphenol derivatives and/or of fatty acid amides is about 2/1.

9. Additive according to one of claims 7 or 8, **characterised in that** it comprises between 30 and 50% by volume of polyisobutene succinimine amide.

10. Additive according to one of claims 7 to 9, **characterised in that** it comprises between 15 and 25% by volume of alkylphenol derivatives and/or of fatty acid amides.

11. Additive according to one of claims 7 to 10, **characterised in that** it comprises between 15 and 25% by volume of apolar solvent.
